(19) Europäisches Patentamt
European Patent Office
Office européen des brevets

(11) **EP 2 096 558 A1**

(12) **EUROPEAN PATENT APPLICATION**

(43) Date of publication:
**02.09.2009 Bulletin 2009/36**

(51) Int Cl.:
***G06F 17/30*** *(2006.01)*

(21) Application number: **08003788.0**

(22) Date of filing: **29.02.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Sony Corporation**<br>**Tokyo 108-0075 (JP)** | (72) Inventor: **Nemetz, Thomas**<br>**5020 Salzburg (AT)**<br><br>(74) Representative: **Müller - Hoffmann & Partner**<br>**Patentanwälte**<br>**Innere Wiener Strasse 17**<br>**81667 München (DE)** |

(54) **Method for generating an ordered list of content items**

(57) Method for generating an ordered list of content items from a content item data base (DB), comprising the steps of: detecting at least one new content item (X, Y) that has been added to said content item data base (DB), assigning a time stamp (TS) to said new content item (X, Y), said time stamp (TS) being descriptive for the time at which the respective new content item (X, Y) was added to said content item data base (DB), determining a time in service (TIS) for said new content item (X, Y) by comparing a current time with said time stamp (TS), and generating said ordered list (L) of content items depending on said time in service (TIS).

Fig. 1

**Description**

TECHNICAL FIELD

The invention relates to a method for generating an ordered list of content items from a content item data base and to a creating mechanism for generating an ordered list of content items from a content item data base.

BACKGROUND

Today, audio data, video data or other data, in the following referred to as content items, are often stored in large data bases comprising a huge number of content items. The content items can be accessed by the user, e.g. by downloading or streaming. A content service enables a user to access such large content item data bases and to enjoy content items and search for specific content items.

However, a user may not want to spend a lot of time searching for content items and creating a list of content items according to his preferences, i.e. his taste, e.g. taste of music. Instead the user desires a system where he can easily input a few preferences and a system suggests a list of content items from the data base that matches the users taste. The user can then enjoy these content items matching his taste.

Prior art systems often do not generate lists of content items that accurately match the user's taste.

It is an objective of the present invention to provide a method for generating an ordered list of content items from a content item data base that overcomes these drawbacks of prior art methods and generates a list of content items that matches the user's taste.

It is a further object of the present invention to provide a creating mechanism for generating an ordered list of content items from a content item data base that avoids the drawbacks of prior art systems and generates a list of content items that matches the user's taste.

SUMMARY OF THE INVENTION

In order to solve this objective, a method for generating an ordered list, also referred to as playlist, of content items, e.g. audio data (songs) or video data, from a content item data base, may comprise the steps of: providing, i.e. collecting, user community recommendation information for at least one content item of said data base, said user community recommendation information being descriptive of user behavior with respect to said at least one content item; determining a time in service for said at least one content item of said subset, said time in service representing the time period between the time at which said at least one content item was added to said data base and a current time; and determining said ordered list for a user based on said user community recommendation information and said time in service.

It is possible that said time in service is used as a weighting factor such that a first content item that has been added to said content item data base after a second content item is positioned at a higher position within said ordered list than said second content item.

The method may also comprise determining a subset of content items from all of the content items in said content item data base; and determining said ordered list based on said subset.

It is possible that at least one content description variable is associated with said one content item, said content description variable being descriptive of at least one attribute of the content of said one content item. Further, said method may further comprise the steps of: providing at least one content selection variable corresponding to said content description variable; and determining said subset depending on a similarity between said content description variable and said at least one content selection variable, wherein said similarity is determined by determining a number of matches between at least one content description variable and corresponding content selection variable. Regarding the similarity, it should be noted that there may be a plurality of content description variables for describing a plurality of attributes of said one content item. The content selection variable may correspond to one of these attributes. The similarity may then be seen as the number of same content selection and description variables.

The method may also comprise the steps of: receiving user input corresponding to a user search criterion; and deriving said at least one content selection variable (CSV) from said user input. In other words, search terms specified by the user may be entered and based on the search terms candidates for putting in a playlist are determined. Search terms could e.g. be "rock" and "1980s", i.e. the user may have entered that he likes rock from the 1980s.

The method may also comprise the steps of: providing user selection data or a user profile representing user selection behavior with respect to said one content item of said data base. The user selection data may e.g. indicated whether the user has selected, accessed, streamed or downloaded the respective content item. The user selection data may also indicate how long the user has listened to a content item (song). The user selection data may also be determined depending on the selection behavior of other users. It is, then, possible to derive said at least one content selection variable from the content description variable of said one content item based on said user selection data of said one content item. One embodiment might be that a user profile may reflect a like for content items in terms of metadata. E.g. if 100 songs have been accessed with 90 in the category "pop_german", then this might indicate that a user likes this type of music, i.e. if a user has selected, i.e. accessed or streamed or downloaded, songs of a certain category more often than a predetermined threshold, than it may be assumed that the user likes this respective category. Therefore, the system would detect pop_german from the user profile and use it as a content selection variable to search for candidates to put in an ordered playlist.

The method may also comprise deriving said at least one content selection variable from the content description variable of a currently selected content item of said data base. "Currently selected" can mean that the content item is ready for download or streaming or in the process of being streamed or otherwise accessed by the user. Thus, the user may be provided with a function "find similar content items" to the currently selected content item.

It is also possible to update said ordered list in response to a user request for access to a content item.

The method may also comprise measuring a selection time period representing the time the currently selected content item has been accessed or streamed by the user; updating said ordered list after said selection time period exceeds a certain threshold time period.

Said method may also comprise a step of determining a sorting value for said one content item which sorting value is used as a sorting criterion when generating said ordered list, wherein said sorting value depends on said user community recommendation information.

It is further possible that said user community recommendation information comprises a first access factor corresponding to the total number of times said one content item has been accessed by all users.

Also, it is possible that said user community recommendation information comprises a second access factor corresponding to the total number of distinct users who have accessed said one content item.

Further, it is possible that said second access factor depends on a second access scaling factor which is equal to one divided by the total number of users.

Still further, said user community recommendation information may comprise a feedback factor corresponding to the total number of positive feedback ratings of all users for said one content item.

The feedback factor may depends on a feedback scaling factor which is equal to one divided by the total number of all feedback ratings of all users for said one content item.

The sorting value may be determined as a product of said first access factor, said second access factor, said feedback factor and the number of matches divided by said time in service.

Said subset may be determined prior to determining any of said first access factor, second access factor, second access scaling factor, feedback factor and feedback scaling factor.

The method may also comprise changing the order of said ordered list to obtain a re-ordered list by applying playlist sequencing rules, wherein said playlist sequencing rules avoid that a first content item of said ordered list, said first content item having a first content description variable and a second content item of said ordered list, said second content item having a second content description variable, said first and second content items being subsequently arranged within said ordered list and being similar to each other with respect to said first and second content description variables, are subsequently arranged within said re-ordered list.

A method for generating an ordered list of content items may also comprise the steps of: detecting at least one new content item that has been added to said content item data base, assigning a time stamp to said new content item, said time stamp being descriptive for the time at which the respective new content item was added to said content item data base, determining a time in service for said new content item by comparing a current time with said time stamp, and generating said ordered list of content items depending on said time in service. The time in service is therefore the time period between the time at which a new content item was added to said data base and a current time at which the ordered list of content items is generated.

It should be noted, that each content item of said data base is at one time a new content item when it was added to said data base, e.g. during an initialization phase of the method/system. Therefore, it is possible that each content item of said content item data base has a time stamp and a time in service may be determined for each content item of the data base.

Because said ordered list of content items is generated depending on the time in service of a specific content item, it is possible to take into account whether a particular content item has been added very recently to the data base or has been in service for a long time. If a particular content item has been in service only for a very short time this content item might not have been accessed many times, whereas a different content item that has been in service for a long time might have been accessed many times. In this case in prior art systems the content item that has been in service for a long time would generally be rated higher, i.e. put on a higher position in said ordered list than the content item that has been added very recently. However, by taking into account the time in service of the different content items it is possible to assure that the content item that has been added very recently to said data base will be arranged at a higher position within said ordered list even though it may not have been accessed many times.

In an embodiment, said time in service may be used as a scaling factor such that a first new content item that has been added to said content item data base after a second new content item is positioned at a higher position within said ordered list than said second new content item.

In a further embodiment, said method may comprise a step of determining a sorting value for said new content item which sorting value is used as a sorting criteria when generating said ordered list, wherein said sorting value depends on a first access factor, which depends on or is descriptive for the total number of times the new content item has been accessed by all users of the system / database.

In a further embodiment, said sorting value depends on a second access factor, also referred to as "REACH", which depends on or is descriptive for the total number of distinct users who have accessed said new content item. Said second access factor may describe how often a content item was accessed, i.e. reached by all users. For example, if user X plays sons A and B, user Y plays songs A, B, C, A and user Z plays song A and D, then the second access factor REACH for songs A to E would be: REACH(A) = 4, REACH(B) = 2, REACH(C) = 1, REACH(D) = 1 and REACH(E) = 0.

In a further embodiment, said second access factor may depend on a second access scaling factor which is equal to one divided by the total number of users. When said second access scaling factor and said second access factor are multiplied, a relative factor, also referred to as relative REACH-factor, may be calculated.

In a further embodiment, said sorting value may depend on a feedback factor, which depends on or is descriptive for the total number of positive feedback ratings of all users. During the system is in use, users may give feedback on particular content items. For example, a user may press a positive feedback button on his device that he uses for accessing said content items indicating that he likes a particular content item. There may also be a negative feedback button provided, which the user may press and thereby indicates that he doesn't like a particular content item. Each time a positive feedback for a particular content item is given, said feedback factor may be incremented by one.

In a further embodiment, said feedback factor may depend on a feedback scaling factor which is equal to one divided by the total number of all feedback ratings of all users. When said feedback factor and said feedback scaling factor are multiplied, a relative feedback factor may be determined. This relative feedback factor may be used for determining said sorting value.

In a further embodiment, at least one content description variable may be associated with or assigned to said new content item, said content description variable being descriptive for the content of said new content item. Further, said method may comprise: receiving at least one content selection variable corresponding to said content description variable, said content selection variable being descriptive for the preferences, i.e. taste of a user, and determining said sorting value depending on the similarity between said content description variable and said content selection variable.

In a further embodiment, a plurality of content description variables may be associated with said new content item, and said method comprises receiving a plurality of content selection variables, each corresponding to one of said plurality of said content description variables, determining said similarity by determining the number of matches between content description variables and corresponding content selection variables.

In a further embodiment, content items with no matches may be removed from said ordered list prior to determining any of said first access factor, second access factor, second access scaling factor, feedback factor and feedback scaling factor. In other words, content items with no matches are not considered any further for being put into said ordered list, i.e. for content items with no matches exist no sorting value may be determined. This greatly reduces the needed processing time when determining said ordered list.

In a further embodiment, said sorting value may be determined as a product of said first access factor, said second access factor, said feedback factor and the number of matches divided by said time and service. It is also possible to further use the second access scaling factor and/or the relative feedback as factors when calculating said sorting value.

Said creating mechanism (creating logic) for generating an ordered list of content items from a content item data base may comprise: a time stamp assigning mechanism adapted for detecting at least one new content item that has been added to said content item data base, and further adapted for assigning a time stamp to said new content item, said time stamp being descriptive for the time at which the respective new content item was added to said content item data base, a processing mechanism adapted for determining a time in service for said new content item by comparing a current time with said time stamp, and a list generating mechanism adapted for generating said ordered list of content items depending on said time in service.

In an embodiment, said time in service is used as a scaling factor such that a first new content item that has been added to said content item data base after a second new content item is positioned at a higher position within said ordered list than said second new content item.

In a further embodiment, said list generating mechanism is further adapted for determining a sorting value for said new content item which sorting value is used as a sorting criteria when generating said ordered list, wherein said sorting value depends on a first access factor, which depends on the total number of times the new content item has been accessed by all users.

In a further embodiment, said sorting value depends on a second access factor, which depends on the total number of distinct users who have accessed said new content item.

In a further embodiment, said second access factor depends on a second access scaling factor which is equal to one divided by the total number of users.

In a further embodiment, said sorting value depends on a feedback factor, which depends on the total number of positive feedback ratings of all users.

In a further embodiment, said feedback factor depends on a feedback scaling factor which is equal to one divided by the total number of all feedback ratings of all users.

In a further embodiment, at least one content description variable is associated with said new content item, said content description variable being descriptive for the content of said new content item. Said creating mechanism further comprises: a filtering mechanism adapted for receiving at least one content selection variable corresponding to said content description variable, said content description variable being descriptive for the preferences of a user, and for determining the similarity between said content description variable and said content selection variable, and for outputting filtered content items to said processing mechanism.

In a further embodiment, said filtering mechanism is adapted for determining said similarity by determining the number of matches between content description variables and corresponding content selection variables.

It should be noted that all embodiments mentioned in conjunction with the method explained above can also be applied to the creating mechanism in an analogous manner.

All different aspects of the present invention as set out above and further elucidated below might be combined in any way. The accompanying drawings, which are incorporated in and constitute a part of the specification, illustrate an exemplary embodiment of the invention, and, together with a general description of the invention given above, and the detailed description of the embodiments given below, serve to explain the principle of the invention, wherein:

BRIEF DESCRIPTION OF THE DRAWINGS

Fig. 1    shows a first part of the system comprising a time stamp assigning mechanism;

Fig. 2    shows a second part of the system comprising a processing mechanism and list generating mechanism; and

Fig. 3    shows an overview of the complete system being accessed by different users.

DETAILED DESCRIPTION OF THE INVENTION

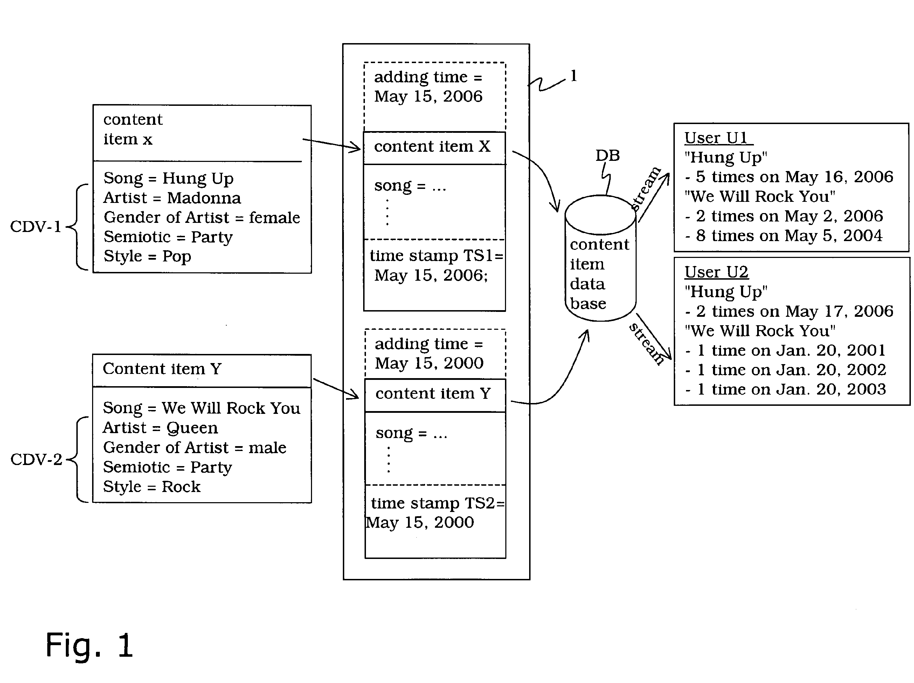

Fig. 1 shows on the left hand side a first content item X which in the example is the song "Hung up". The first content item X further comprises different content description variables CDV-1 also referred to as "content meta data". Said content description variables CDV-1 can e.g. be semantic or semiotic attributes or any other data that describes the type of the respective content item. In the example, said first content item X comprises the following content description variables: artist, gender of artist, semiotic, style. These content description variables have the following values:

| | | |
|---|---|---|
| Artist | = | Madonna |
| Gender of artist | = | Female |
| Semiotic | = | Party |
| Style | = | Pop |

The example of Fig. 1 shows a further content items Y comprising the song "We will rock you". The second content item Y also comprises content description variables CDV-2, i.e. artist, gender of artist, semiotic, style. The following values are assigned to these content description variables:

| | | |
|---|---|---|
| Artist | = | Queen |
| Gender of artist | = | Male |
| Semiotic | = | Party |
| Style | = | Rock |

In the example of Fig. 1 said first content item X is added to the content item data base DB on May 15, 2006. Therefore, a time stamp assigning mechanism 1 assigns a first time stamp TS1 to said first content item X, wherein said first time stamp TS1 is equal to May 15, 2006. In this example the timestamp indicates a date, but it may indicate a time also. The timestamp may be derived from the internal time clock of a computer or server on which the database system is loaded. In other embodiments the timestamp may be derived from an external time clock source, for example connected to the database system via the internet.

Said second content item Y was added to said content item data base DB on May 15, 2000. Therefore, said time stamp assigning mechanism 1 assigns a second time stamp TS2 to said second content item Y, wherein said second time stamp TS2 is equal to May 15, 2000.

After adding the respective time stamp, the new content items, i.e. in the example said first content item X and said second content item Y are added to said content item data base DB. Time stamps may be stored in a database field linked to the content by an identifier. In an alternative embodiment, the timestamp may form part of the identifier.

After content items have been added to the content item data base DB, the content items may be accessed by different users, e.g. by downloading or streaming respective content items.

For each content item different counters are used in order to collect information about the usage data, i.e. the accessing statistics or the like, of the respective content item. More specific, for each content item, a first access factor OCC and a second access factor REACH is determined. Also, a feedback factor F is determined. The factors may be stored in separate database fields. OCC and REACH may be calculated by the database system automatically and stored in database fields derived from information stored in other fields which store usage statistics or records for content items.

In the example of Fig. 1, a first user U1 accesses said first content item X corresponding to the song "Hung up" via streaming five times on May 16, 2006. Therefore, the first access factor OCC-1 of said first content item X is incremented by 5. Also, the second access factor REACH-1 is incremented by 1. If said first content item X has never been accessed by any other user before, said second access factor REACH-1 would be equal to 1. In other words, said second access factor REACH is equal to the number of distinct users who have downloaded or prelistened or streamed or otherwise used/accessed a particular content item in the service, i.e. in the data base DB, whereas the first access factor OCC corresponds to the number of times a content item has been downloaded or pre-listened or streamed or otherwise used by all users.

Further, in the example of Fig. 1, said second content item Y corresponding to the song "We will rock you" was accessed by said first user U1 via streaming two times on May 2, 2005 and eight times on May 5, 2004. Therefore, on May 2, 2005 the first access factor OCC-1 would have been incremented by two and incremented by eight on May 5, 2004. Further, if said first user U1 has not listened to said second content item Y prior to May 2, 2005, said second access factor REACH-1 would have been incremented by one on May 2, 2005.

Further, in the example of Fig. 1, a second user U2 accesses, e.g. streams or listens, to said first content item X corresponding to the song "Hung up" two times on May 17, 2006, which leads to the first access factor OCC-1 being incremented by two and the second access factor REACH-1 by one, wherein said first and second access factor OCC-1 and REACH-1 correspond to the first content item X. Further, the second user U2 listens to the second content item Y corresponding to the song "We will rock you" via streaming one time on January 20, 2001, one time on January 20, 2002 and one time on January 20, 2003. Therefore, on each of these dates said first access factor OCC-2, corresponding to said second content item Y, would be incremented by one.

Summarizing, after the accessing according to the example of Fig. 1, the first access factor OCC-1 and second access factor REACH-1 of the first content item X would have the following values:

$$\text{OCC-1} \quad = \quad 7 \text{ (the first content item X has been accessed 7 times in total)}$$
$$\text{REACH-1} \quad = \quad 2 \text{ (two distinct users have accessed the first content item X)}$$

The values for the first access factor OCC-2 and the second access factor REACH-2 corresponding to the second content item Y are as follows:

$$\text{OCC-2} \quad = \quad 13 \text{ (the second content item Y has been accessed 13 times in total)}$$
$$\text{REACH-2} \quad = \quad 2 \text{ (two distinct users have accessed the second content item Y)}$$

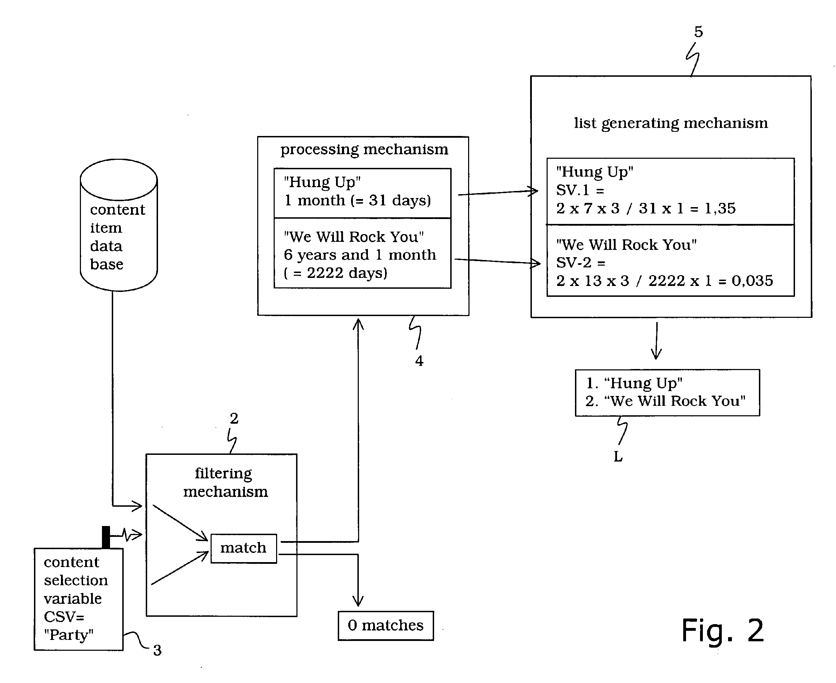

Fig. 2 shows the generation of an ordered list L.

In the example, a user may have certain preferences representing the user's taste.

For example, the user may want to listen to party songs. Therefore, the user may enter on a device 3 that he wants to listen to party songs. Therefore, the device 3 of the user sets a content selection variable CDV to the value "party" and transmits this content selection variable to a filtering mechanism 2. The filtering mechanism 2 accesses the data base DB and compares the content description variables CDV of all content items of the data base DB with the input content selection variable CSV. If a content item does not have a content description variable CDV which is equal to the content selection variable CSV, in the example "party", the respective content item gets discarded and will not be further considered as entry in said ordered list L. This greatly reduces the needed processing time for generating said ordered list L because the number of content items to be further processed is greatly reduced.

Also, by discarding content items with no matches, the filtering mechanism 2 greatly reduces the amount of bandwidth that is needed when said content items are streamed to a user, because less content items are streamed than in prior art systems. Also, suitable content is found faster.

In the example of Figs. 1 and 2, the first content item X has a content description variable CDV-1 "semiotic" which is equal to "party". Further the second content item Y also has a content description variable CDV-2 "semiotic" which is also equal to "party". Therefore, in this example both content items, i.e. content item X and content item Y are further processed and input into processing mechanism 4, i.e. none of said first and second content item are discarded by the filtering mechanism 2.

The processing mechanism 4 determines for each received content item the time in service TIS, e.g. the processing mechanism 4 determines how long the respective content item has already been stored in the data base. The processing mechanism 4 determines the time in services TIS by comparing a current time with a respective time stamp of a content item.

In the example of Fig. 2 the ordered list L is generated on June 15, 2006, and thus, the current time is equal to June 15, 2006. The processing mechanism 4 compares the first time stamp TS1 of the first content item X with the current time, i.e. June 15, 2006. Thus, the time in service TIS-1 of the first content item X is equal to 31 days. The time in service TIS-2 for the second content item Y corresponding to the song "We will rock you" is determined by comparing the second time stamp TS2 with the current time. Thus, the time in service TIS-2 of the second content item Y is equal to 2222 days (6 years and 1 month including 1 extra day for the leap year 2004).

It should be noted that the example is given using days as the smallest time unit. It is, of course, possible to use more exact time units, e.g. seconds or minutes.

The ordered list L is then generated by a list generating mechanism 5 which receives the content items X,Y with assigned time in service values TIS-1, TIS-2 from the processing mechanism 4.

The list generating mechanism determines a sorting value for each content item according to the following formula:

$$L = SORT \ ( \ CONTENT \ SCORE \ x \ CONTENT \ SELECTOR \ ) \ .$$

In this formula, CONTENT SCORE is defined as follows:

$$CONTENT \ SCORE = REACH \ x \ OCC \ x \ F \ / \ TIS \ .$$

Further, CONTENT SELECTOR is defined as follows:

CONTENT SELECTOR = SUM (MATCH ((CSV-1, CDV-1); (CSV-2, CDV-2), ...; (CSV-n, CDV-n))

The value of CONTENT SELECTOR therefore corresponds to the number of matches between content selection variables and content description variables.

An ordered list L calculated by the above formula may be modified, i.e. re-ordered, by playlist sequencing rules thus determining the final order of content items within said ordered list. Playlist sequencing rules avoid e.g. that the same song is not put into an ordered list within a certain period of time. Further, playlist sequencing rules may e.g. assure that a certain percentage of songs (content items) are German songs, if the system is e.g. in use in Germany. In some embodiments playlist sequencing rules determine that a songs by the same artist cannot be adjacent one another in the playlist. For variety, it may be desirable that two content items by the same artist are separated by e.g. nine other content items. This may be performed by allocating an identifier in the database to an artist and when the next candidate entry in the playlist is determined, checking whether the same artist identifier is present in the previous ten content items. If that artist identifier is found then, the candidate content item might be ignored or reserved for subsequent entry at a more appropriate position in the playlist.

The playlist sequencing rules, thus, determine the final order of the playlist. Examples of rules are e.g.:

- artist separation rule: do not play the same song within a predetermined period of time, e.g. within the next x minutes;

- song separation rule: do not play the same song within another predetermined period of time, e.g. within the next y minutes;
- content variation rule: change the order of the songs according to the associated content description variable CDV, e.g. make use of the content description variable "tempo", i.e. use a tempo variation rule such that e.g. two slow songs are followed by two medium speed songs to be followed by three slow songs to be followed by three medium speed songs to be followed by two slow songs and so on.
- local French content rule: twenty percent of content items must be local content items. Therefore, songs may be put in a pre-arrangement pool with e.g. 80% international songs and 20% local songs.

Therefore, there may be a pre-arrangement pool of content items on which the playlist sequencing rules and/or filtering mechanism and/or processing mechanism operate. The playlist sequencing rules determine the final order of the songs in the playlist.

The arrangement process is illustrated in Fig. 4, wherein the input song list 2 is the output from a pre-arrangement process. The song list 2 comprises songs or tracks that match the affiliate settings best. As further input to the arrangement process, the history is used, i.e. a list of tracks with a further time stamp when they have been distributed to a client application. Therefore, for the content items that had been accessed in the past, a further time stamp may be stored. This further time stamp indicates when the respective content item has been selected, i.e. accessed or streamed or downloaded by a user. The playlist sequencing rules govern the position of the track/song in a channel. The input c corresponds to the number of songs recommended for a channel c.

The playlist sequencing rules, thus, may generate a more diversified or varied sequence of content items that is not solely governed by decreasing relevance to the user. In other words, the playlist sequencing rules may make a playlist less boring for a user because the order of songs may different than his expectations. Of course, it is possible to not use playlist sequencing rules or to use them selectively.

In the example of Figs. 1 and 2, the first content item X and the second content item X both have a content description variable CDV-1, CDV-2 "semiotic" that is equal to "party". Therefore, the value of CONTENT SELECTOR, which is determined for each content item, is equal to 1 for the first and second content item X,Y.

Further, first content item X and second content item Y have both been accessed by two different users U1, U2 (it is assumed that no other users have accessed content item X and content item Y). Therefore, the second access factor REACH-1 and REACH-2 corresponding to the first content item X and the second content item Y, respectively, is in each case equal to 2.

In an embodiment, the system may offer the user the possibility to rate a content item, i.e. to give feedback. In a very simple form, the feedback may e.g. be simply "like" or "dislike", i.e. the user can rate a content item by pressing a button on his device 3 if he like a particular content item presented to him or press a different button if he does not like a particular content item.

In the example, the first content item X has been rated positively three times, e.g. the first user U1 may have rated the song "Hung up" positively two times and the second user U2 has rated this song positively one time. Further, user U2 may have rated the second content item corresponding to the song "We will rock you" three time positively. Therefore, a feedback factor F is equal to 3 for both content items X, Y.

When a user rates a song, i.e. gives feedback, he may input his feedback on his device 3. The feedback is then transmitted to the system. e.g. the filtering or processing mechanism, which updates the feedback factor for the respective content item. This in turn leads to a re-ordering, i.e. updating, of the ordered list L. This ordered list L is then transmitted to the device 3 and the user may start streaming or downloading content items.

Based on the above explained formula, said list generating mechanism 5 calculates a sorting value for each content item X, Y. A first sorting value SV-1 for the first content item X is equal to:

$$SV\text{-}1 = 2 \times 7 \times 3 \: / \: 31 \times 1 = 1{,}35.$$

The second sorting value SV-2 for the second content item Y is equal to:

$$SV\text{-}2 = 2 \times 13 \times 3 \: / \: 2222 \times 1 = 0{,}035.$$

Therefore, although the second content item Y corresponding to the song "We will rock you" has been accessed more often (13 times) than the content item X (7 times), the sorting value SV-2 = 0,035 is smaller than the first sorting value SV-1 = 1,35.

The list generating mechanism 5 then sorts the content items, i.e. content item X and content item Y, according to the respective sorting value SV-1, SV-2, wherein higher sorting values lead to a higher position in said ordered list L.

The outputted ordered list L is therefore:

1. Content item X: "Hung up"
2. Content item Y: "We will rock you"

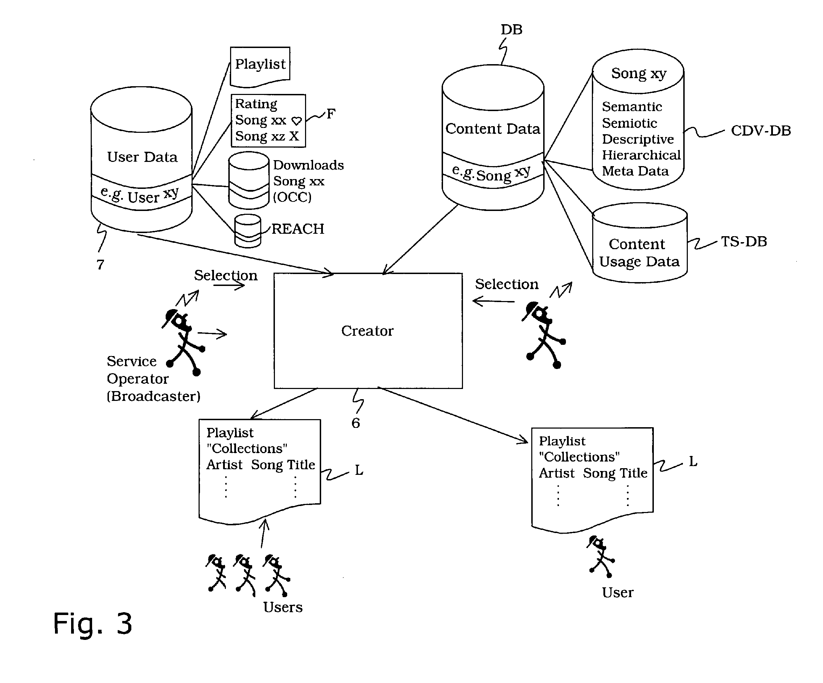

Fig. 3 shows how the system may be used, wherein a creating mechanism 6, also referred to as creator, generates playlists, i.e. ordered lists, for users. The creating mechanism 6 may comprise the time stamp assigning mechanism 1, the filtering mechanism 2, the processing mechanism 4 and the list generating mechanism 5.

As shown in Fig. 3, either a service operator, i.e. broadcaster or an individual user can input a selection into the creating mechanism 6, e.g. in the form of content selection variables. If the service operator shown on the left hand side of Fig. 3 inputs a selection, the individual users shown on the left hand bottom side of Fig. 3 may not need to specify selections themselves and can enjoy playlists generated by the creating mechanism in dependence of the selection of the service operator.

In the example of Fig. 3, the creating mechanism accesses a user data base 7 in which e.g. the different feedback values for different content items and/or users are stored. Further, the number of downloads, i.e. the values for the first access factor OCC are stored. Also in said user data base 7, the second access factors REACH are stored for each song.

The creating mechanism 6 also accesses the content data base DB comprising content items, e.g. songs. The content data base DB has e.g. a content description variable data base CDV-DB in which the different content description variables are stored for each song. Further, the content data base DB comprises e.g. a time stamp data base TS-DB in which the different time stamps for each content item are stored.

The following elucidations may help person skilled in the art to get a better understanding of the invention or its background:

A content service enables a user to enjoy content items and search for a content item. A content service comprises a user data base, a usage data base, a content data base, which contains content and semantic and/or semiotic meta data.

Using the system as described above enables the service provider or the user to create a popular content selection or playlists, i.e. an ordered list of content items, e.g. the top ten 1960's rock songs, the best surf movies of all times, or the like. The collection, i.e. ordered list, is created by combining actual usage data, e.g. reach, occurrence, feedback, ..., with the descriptive content meta data, e.g. 1960's, rock, surf, .... The ordered list reflects the most popular content items valuing the said content variables within the content service community.

When using the system, only available content items make it into collections and playlists and not chart content which service operators might not have licensed or ingested. Therefore, the content items of the data base may comprise a flag indicating whether the respective content item is sellable in one territory. "Sellable" can mean that a content item is licensed, complete with respect to associated meta data, and/or has been checked for correctness.

In prior art, in order to generate playlists, i.e. ordered lists of content items, collaborative filtering algorithms were used which require a lot of computing power. E.g. when collaborative filtering algorithms are used, the number of operations necessary for determining a playlist is proportional to $n^2$, where n is the number of users using the system. This is because collaborative filtering algorithms try to find out the user with the "closest taste" to the user for which an ordered list shall be generated.

Using the above explained system, the number of operations is greatly reduced and is only proportional to n. In other words, the described system does not perform collaborative filtering in the traditional understanding and therefore greatly reduces the needed processing time/power for generating a playlist. This is achieved by first selecting CV. Then, only songs with matching CVs are used to create a user profile. Thus, not all songs are used as in prior art.

In other words, the described system focuses on areas where collaborative filtering is strong, while neglecting areas where it is problematic. Common problems of collaborative filtering are:

1. New data base items (songs etc.) cannot be handled
   - No user has ever used the new items, since they are new
   - As a consequence they will never get recommended
2. Very unpopular items tend to remain very unpopular
   - Items which very few people have rated will hardly ever be recom-mended since chances are low the user will get grouped with one of those very few people
3. Unrated items are isolated, i.e. cannot be recommended

(continued)

- Items that have not been rated by anybody will never be recom-mended
- This can be very severe problem when the system has been in use only for a short period of time

4. Finding a similar user involves heavy computation
- The larger the user base the worse, i.e. the scaling is not done well.

Technical solution

Start: Content Service (e.g. StreamMan) with User Data and Usage Data and Content Database
**Output:** Content Collections and Playlists:

e.g. The Best Songs of the 1960s'

(automatically generated the best n (e.g. 10) songs of the 1960's)

e.g. The Best Surfing Videos

(automatically generated the best n (e.g. 10) videos on surfing)

e.g. The Best Russian Party Songs

(automatically generated the best n (e.g. 10) sons on Party and Russia)
Instead of Party and Surfing it is possible to use:

Alternative Rock
Planet Pop
Icelandic Electro Groove
French Chansons
Jimi Hendrix
Extreme Ironing
Italo Western
Car Race Games

Collections and Playlists, i.e. ordered lists L, are calculated in the following way:
$$\text{Collection/Playlist (Content Item 1 .... Content Item n)} = \text{SORT (CONTENT SCORE} \times \text{CONTENT SELECTOR) (corrected by playlist sequencing rules)}$$

$$\text{CONTENT SCORE} = \text{REACH} \times \text{OCCURRENCE} \times \text{FEEDBACK} / \text{TIME}$$

REACH: Number of Users who have downloaded or prelistened or streamed or otherwise used content item in the Service (e.g. StreamMan)
OCCURRENCE in Playlists: Number of how often a content item has been downloaded or prelistened or streamed
Positive FEEDBACK: Number of Times a content item has been rated positively (e.g. Rated Like/Total Number of Ratings * Constant)
TIME in Service: e.g. number of days a content item has been offered in the Service
CONTENT SELECTOR = SUM (Content Selection Variable 1 ... Content Selection Variable n)
Selection Variable = Content Description Match (e.g. Semantic and Semiotic Attributes: 1960's, Sun, Surfing, Party). This may be equal to values between 0 and number of content attributes.

The content selection variable can be set by the service provider or the community user.

In the following, a number of expressions are defined used throughout the specification:

Content item: e.g. a Song, a Video or a Game.

User Data: data base containing User Profiles and Usage Data (e.g. Playlists, Ratings (like, dislike), Number of Downloads, Number of Streams, ...

Content Data: data base containing content items and corresponding descriptions and Metadata, i.e. content description variables (semantic, semiotic, hierarchical, ...), data base also containing Content Usage Data (How long in service, ...).

Content Description/Selection Variable: Metadata describing the content items in very much detail (semantic (e.g. Adagio), semiotic (e.g. aggressive, calm), hierarchical (e.g. Jazz, Free Jazz, JazzRock, ...)

These entry points can either be flat (e.g. "The World of Hip Hop", "Slow Songs" or "80's Pop") or rather sophisticated (e.g. "Latest Grime", "Great Piano Ballads" or "Female Singer/Songwriter Music from the 90's"), it all depends on creativity and the matching ratio.

Playlist sequencing rules: Rules defining the final order of content items in a playlist or collection (e.g. Artist separation rule, International: Local repertoire mix)

Collection: Static arrangement of content Items.

Playlist: Dynamic arrangement of content Items.

Service Operator: Entity running an entertainment service.

## Commercial Usage Scenario

1. Content Collection Creation by Service Operator

Service Operators create predefined Content Selections. It is possible that the collections are generated fully automated, as the collections reflect the most popular and available content within given selection criteria (content description/ selection variables).

2. Back up Solution for highly sophisticated solutions for Service Operator

Service Operators offer highly sophisticated content offering systems (e.g. learning the particular taste of users in particular situations). If of failures of these systems (e.g. not enough or poorly diversified content for learning algorithms) playlists can be completed or extended with content items suggested by the Collection creator under the given Content Selection Variables.

Thus, the user selects a music channel b giving explicit or implicit feedback on content variables. It is possible to short cut the learning algorithm by generating a playlist in the described way.

3. Content Playlist Creation by User

Users like to create their own playlists. It is possible that the playlists are generated fully automated, reflecting the most popular but available content item within given selection criteria (content selection variables).

## Overall Advantages:

Only available content items make it into collections and playlists (not chart content which service operator might not have been licensed or ingested).

Collections and Playlists represent the most popular content of the service community.

Because no collaborative filtering algorithms are needed, much less computing power is required than when using collaborative filtering algorithms.

It is, therefore, possible to generate an ordered list of content items which takes into account user community recommendation information, i.e. one or more of an average feedback rating or implicit popularity determined from a number of streaming/download occurances. The number of occurances may be weighted (i.e. divided) by time in service.

Optionally, playlist sequencing rules can randomise the list. Further, not all content in the database may be considered - there may be a first search to identify possible candidates. This first serach can be based on a user query (e.g. boolean), a similarity search based on the metadata associated with a seed content item, i.e. a predetermined content item, or a pre-existing user profile. The factor REACH may be used to better reflect the user community information, i.e. such that it is not skewed by one user who has streamed a content item many times, e.g. 100s of times or more. Unrated songs may be given an average rating (e.g. 2.5/5) - this may happen implicitly in a system which has just like or dislike and prevents unrated songs form never appearing in a recommendation list.

**Claims**

1. Method for generating an ordered list (L) of content items from a content item data base (DB), comprising the steps of:

   providing user community recommendation information (OCC, REACH, F) for at least one content item of said data base (DB), said user community recommendation information being descriptive of user behavior with respect to said at least one content item;
   determining a time in service (TIS) for said at least one content item, said time in service (TIS) representing the time period between the time at which said at least one content item was added to said data base (DB) and a current time; and
   determining said ordered list (L) for a user based on said user community recommendation information (OCC, REACH, F) and said time in service (TIS).

2. Method according to claim 1, wherein said time in service (TIS) is used as a weighting factor such that a first content item (X) that has been added to said content item data base (DB) after a second content item (Y) is positioned at a higher position within said ordered list (L) than said second content item (Y).

3. Method according to claim 1 or 2 comprising:

   determining a subset of content items from all of the content items in said content item data base (DB); and
   determining said ordered list (L) based on said subset.

4. Method according to claim 3, wherein at least one content description variable (CDV) is associated with said one content item, said content description variable (CDV) being descriptive of at least one attribute of the content of said one content item, said method further comprising the steps of:

   providing at least one content selection variable (CSV) corresponding to said content description variable (CDV); and
   determining said subset depending on a similarity between said content description variable (CDV) and said at least one content selection variable (CSV), wherein said similarity is determined by determining a number of matches between at least one content description variable and corresponding content selection variable.

5. Method according to claim 4, comprising the steps of:

   receiving user input corresponding to a user search criterion; and
   deriving said at least one content selection variable (CSV) from said user input.

6. Method according to any one of claims 4 or 5, comprising the steps of:

   providing user selection data representing user selection behavior with respect to said one content item of said data base (DB);
   deriving said at least one content selection variable (CSV) from the content description variable of said one content item based on said user selection data of said one content item.

7. Method according to any one of claims 4 to 6, comprising the steps of:

   deriving said at least one content selection variable (CSV) from the content description variable (CDV) of a currently selected content item of said data base.

8. Method according to claim 7, comprising:

updating said ordered list in response to a user request for access to a content item.

9. Method according to claim 7, comprising:

measuring a selection time period representing the time the currently selected content item has been accessed or streamed by the user;
updating said ordered list after said selection time period exceeds a certain threshold time period.

10. Method according to any one of the preceding claims, comprising a step of

determining a sorting value (SV = CONTENT SCORE x CONTENT SELECTOR) for said one content item (X, Y) which sorting value (SV) is used as a sorting criterion when generating said ordered list (L), wherein said sorting value (SV) depends on said user community recommendation information.

11. Method according to claim 10, wherein said user community recommendation information comprises a first access factor (OCC) corresponding to the total number of times said one content item has been accessed by all users.

12. Method according to claim 10 or 11, wherein said user community recommendation information comprises a second access factor (REACH) corresponding to the total number of distinct users who have accessed said one content item (X, Y).

13. Method according to claim 12, wherein said second access factor (REACH) depends on a second access scaling factor which is equal to one divided by the total number of users.

14. Method according to any one of claims 10 to 13, wherein said user community recommendation information comprises a feedback factor (F) corresponding to the total number of positive feedback ratings of all users for said one content item.

15. Method according to claim 14, wherein said feedback factor (F) depends on a feedback scaling factor which is equal to one divided by the total number of all feedback ratings of all users for said one content item.

16. Method according to claim 14 or 15, wherein said sorting value is determined as a product of said first access factor (OCC), said second access factor (REACH), said feedback factor (F) and the number of matches divided by said time in service (TIS).

17. Method according to any one of claims 3 to 16, wherein said subset is determined prior to determining any of said first access factor (OCC), second access factor (REACH), second access scaling factor, feedback factor (F) and feedback scaling factor.

18. Mechanism for generating an ordered list (L) of content items from a content item data base (DB), comprising:

mechanism for providing user community recommendation information (OCC, REACH, F) for at least one content item of said data base (DB), said user community recommendation information being descriptive of user behavior with respect to said at least one content item;
mechanism for determining a time in service (TIS) for said at least one content item, said time in service (TIS) representing the time period between the time at which said at least one content item was added to said data base (DB) and a current time; and
mechanism for determining said ordered list (L) for a user based on said user community recommendation information (OCC, REACH, F) and said time in service (TIS).

19. A database system configured to output a plurality of content items to a plurality of users comprising

a data input interface configured to allow ingestion of a plurality of content items and corresponding metadata into the database system;
a data request interface configured to accept the input of user identification data;
a database processor configured to:

arrange said content items and corresponding metadata in a database file structure stored in a data store of the database system together with information representing a time stamp for each content item indicative of the time at which the content item was ingested into the database system,

maintain time in service information for each content item in the database file structure calculated with reference to a current time and said time stamp;

maintain in the file structure, for each content item, user community recommendation information representing at least one of (a) a total number of requests for access to a content item by all users and (b) an average rating on a predetermined scale assigned by at least some users;

identify a subset of content items in dependence on one or more of (a) user preferences corresponding to user identification data and (b) at least one database search criterion; and

arrange data representing the subset of content items in an ordered list in which content items are positioned in an order in accordance with the user community recommendation information weighted with the time in service information;

the database system further comprising

a data output interface configured to output an ordered list of content items and, upon command, corresponding content items.

20. Computer program product, comprising computer program means adapted to perform a method according to any one of the claims 1 to 18 or the steps thereof, when it is executed on a computer, a digital signal processing means, and/or the like.

21. Computer readable storage medium, comprising a computer program product according to claim 20.

Fig. 1

EP 2 096 558 A1

5

list generating mechanism

"Hung Up"
SV.1 =
2 x 7 x 3 / 31 x 1 = 1,35

"We Will Rock You"
SV-2 =
2 x 13 x 3 / 2222 x 1 = 0,035

1. "Hung Up"
2. "We Will Rock You"

L

processing mechanism

"Hung Up"
1 month (= 31 days)

"We Will Rock You"
6 years and 1 month
( = 2222 days)

4

content
item
data
base

0 matches

filtering
mechanism

match

2

content
selection
variable
CSV=
"Party"

3

Fig. 2

Fig. 3

Europäisches
Patentamt
European
Patent Office
Office européen
des brevets

## EUROPEAN SEARCH REPORT

Application Number

EP 08 00 3788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/118498 A1 (SONG XIAODAN [US] ET AL) 24 May 2007 (2007-05-24) * abstract * * paragraphs [0010], [0011], [0053], [0057] - [0066], [0104], [0125]; figures * | 1-21 | INV. G06F17/30 |
| X | WO 00/67159 A (XEROX CORP [US]) 9 November 2000 (2000-11-09) * abstract * * page 7, line 10 - page 8, line 4 * * page 24, line 5 - line 18 * * page 27, line 16 - page 33, line 9; figures 14,15 * | 1-21 | |

-----

-----

TECHNICAL FIELDS
SEARCHED      (IPC)

G06F

The present search report has been drawn up for all claims

| Place of search | Date of completion of the search | Examiner |
|---|---|---|
| Munich | 9 December 2008 | Emander, Kristina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 00 3788

This annex lists the patent family members relating to the patent documents cited in  the above-mentioned European search report.
The members are as contained in the European Patent Office EDP file on
The European Patent Office is in no way liable for these particulars which are merely given for the purpose of information.

09-12-2008

| Patent document cited in search report | | Publication date | Patent family member(s) | | Publication date |
|---|---|---|---|---|---|
| US 2007118498 | A1 | 24-05-2007 | NONE | | |
| WO 0067159 | A | 09-11-2000 | AU | 4695900 A | 17-11-2000 |
| | | | BR | 0002300 A | 02-01-2001 |
| | | | US | 6493702 B1 | 10-12-2002 |
| | | | US | 2002016786 A1 | 07-02-2002 |

For more details about this annex : see Official Journal of the European Patent Office, No. 12/82